# EUROPEAN PATENT APPLICATION

(11) **EP 2 022 691 A1**
(43) Date of publication of application: **11.02.2009**
(21) Application number: 07015595.7
(22) Date of filing: 08.08.2007
(51) Int. Cl.: B60T 11/04, B60T 7/10

(54) **Parking brake for an all-terrain vehicle**

(71) Applicant: AEON MOTOR Co., Ltd., Tsuen Shanshang Shiang T'ai nan (TW)
(72) Inventor: Chen, Wen-Chang, Shanshang Shiang Tainan Hsien (TW); Xu, Shi-Feng, Shanshang Shiang Tainan Hsien (TW)
(74) Representative: Dossmann, Gérard

(57) **Abstract**

The invention relates to a parking brake device for an all-terrain vehicle (ATV). The parking brake device is a mechanical one set on a brake disc of a rear wheel shaft, connected with a grip by a connecting line for being operated independently without any connection with a hydraulic braking device used during traveling. As long as the grip is manually turned around to a preset position, the ATV can be parked immovably. As the parking brake device is independent from that used during traveling, the two different braking systems can be respectively operated without interfering each other. In addition, the parking brake device can be used as an auxiliary brake during traveling.

## Description

This invention relates to a parking brake device for an all-terrain vehicle, particularly to one installed independently without any connection with another brake used during traveling, so that the two different braking systems can be respectively operated without interfering with each other.

Commonly, according to safety regulations, an all-terrain vehicle (ATV) is required to be additionally installed with a parking brake device for preventing the ATV from sliding to cause any danger while parked. Most of the conventional ATVs are provided with a hydraulic braking device used during traveling, and a mechanical braking device (controlled by a braking handle) for keeping them from moving while parked. However, in order to save cost, the brake used during traveling and the parking brake device are always combined integrally to share the same braking lining. Such a method has disadvantages as mentioned below.
1. As the braking lining is consumed pretty quickly, the space between the lining and the brake disc has to be adjusted very often, otherwise it is apt to fail to stop and park the ATV.
2. Because the hydraulic braking system has a more powerful driving force, it needs a wider space between the lining and the brake disc to work properly. But, on the contrary, as the mechanical parking brake is operated manually, the space between the lining and the brake disc can not be too wide to keep the mechanical parking brake operated arduously. Thus, it is obviously unsuitable to use the same lining for the two different braking systems with diverse requirements.

Therefore, the invention has been devised to overcome the defects mentioned previously.

The objective of this invention is to offer a parking brake device for an all-terrain vehicle (ATV). The parking brake device is operated independently without any connection with another brake used during traveling, so as to keep the two different braking systems respectively operated without interfering with each other, enabling the parking brake device to absolutely keep the ATV positioned immovably.

The invention is characterized that the parking brake device is a mechanical one set on a brake disc of a rear wheel shaft, connected with a grip by a connecting line for being operated independently without any connection with a hydraulic braking device used during traveling. As long as the grip is manually turned around to a preset position, the ATV can be parked immovably. As the parking brake device is independent from that used during traveling, the two different braking systems can be respectively operated without interfering each other. In addition, the parking brake device can be used as an auxiliary brake during traveling.

This invention is better understood by referring to the accompanying drawings, wherein:
Fig. 1 is a top view of a preferred embodiment of a parking brake device for an all-terrain vehicle in the present invention;
Fig. 2 is a partial perspective view of the preferred embodiment of a parking brake device for an all-terrain vehicle in the present invention; and
Fig. 3 is a front view of Fig. 2.

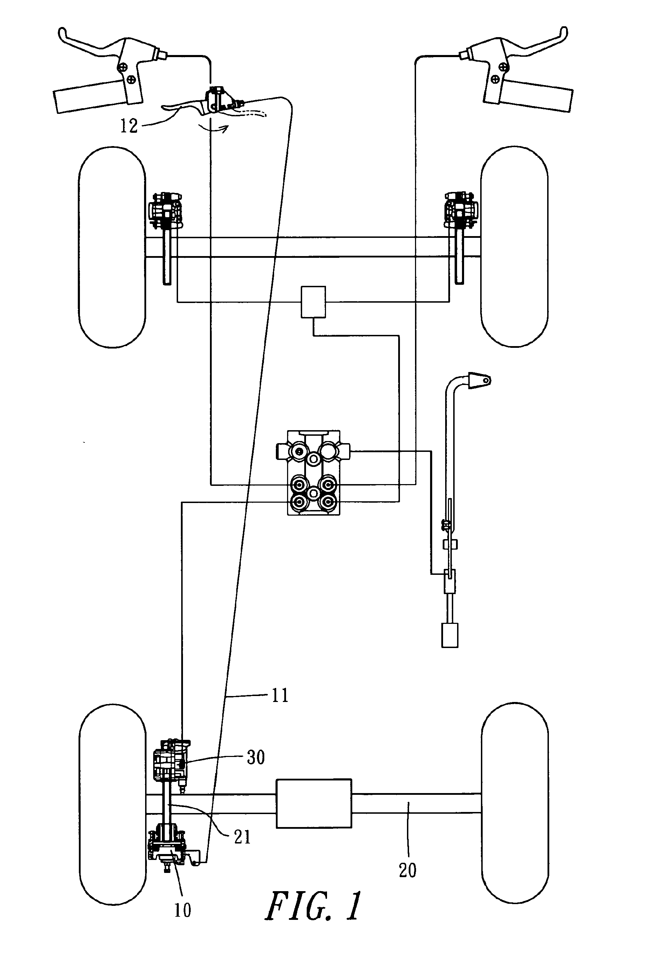

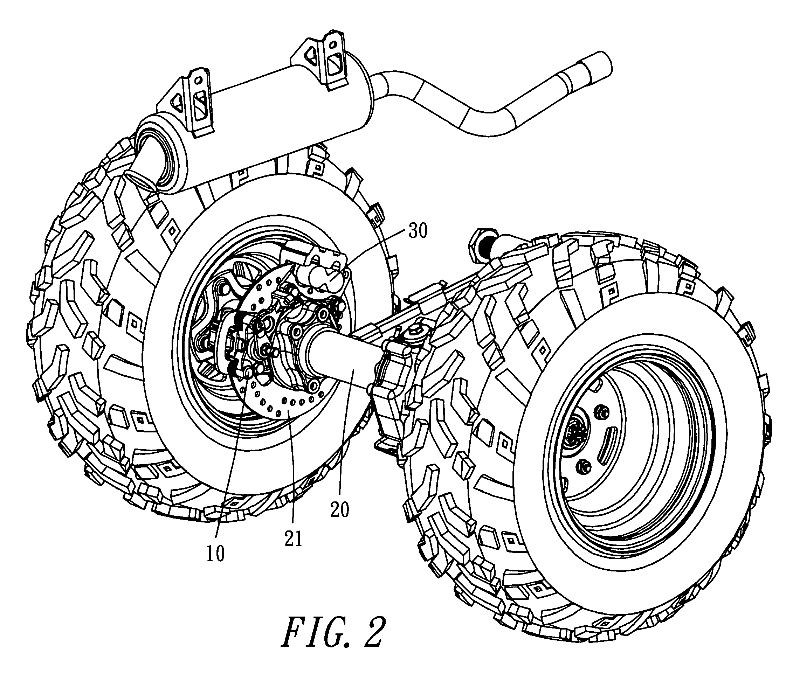

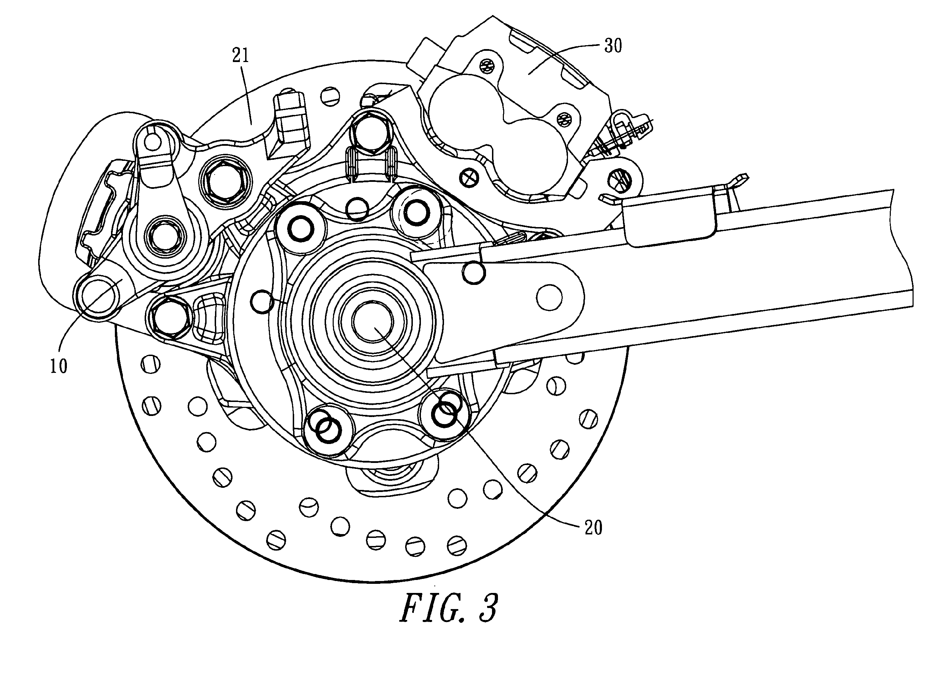

As shown in Figs. 1 - 3, a preferred embodiment of a parking brake device 10 for an all-terrain vehicle (ATV) in the present invention is installed on a brake disc 21 of a rear wheel shaft 20, set independently without any connection with a hydraulic braking device 30 used during traveling. The parking brake device 10 can be a mechanical one, connected to a grip 12 by a connecting line 11, as shown in Fig. 1. The grip 12 can be positioned on a front handle of the ATV or a location convenient for a driver to work with.

As long as the grip 12 is turned around with an angle to be positioned thereafter, as an imaginational line shown in Fig. 1, the ATV can be parked immovably. Moreover, during traveling, the parking brake device 10 can be used as an auxiliary brake if necessary, providing an extra protection.

It is to be noted that as the parking brake device 10 is installed independently without any connection with the hydraulic braking device, it can be properly operated to park the ATV stably, and as mentioned previously, possible to be used as an auxiliary brake during traveling.

While the preferred embodiment of the invention has been described above, it will be recognized and understood that various modifications may be made therein and the appended claims are intended to cover all such modifications that may fall within the spirit and scope of the invention.

## Claims

1. A parking brake device for an all-terrain vehicle (ATV), the parking brake device ( 10 ) supplementarily used in case of parking on a sand beach and set independently without any connection to a hydraulic braking device( 30 ) that is used while traveling, so as to keep said ATV parked stably

2. The parking brake for an all-terrain vehicle as claimed in Claim 1, wherein said parking brake device ( 10 ) is a mechanical one installed on a brake disc of a rear wheel shaft ( 20) and connected to a grip ( 12 ) by a connecting line ( 11 ) so as to let a user turn around said grip ( 12 ) with a certain angle to keep it positioned, so that said ATV is parked immovably.
